(19) **Europäisches Patentamt**

**European Patent Office**

**Office européen des brevets**

(11) **EP 1 486 934 B1**

(12) **FASCICULE DE BREVET EUROPEEN**

(45) Date de publication et mention
de la délivrance du brevet:
**16.08.2006 Bulletin 2006/33**

(51) Int Cl.:
*G08G 1/16* (2006.01)   *B60K 31/00* (2006.01)
*G01S 13/93* (2006.01)

(21) Numéro de dépôt: **04291487.9**

(22) Date de dépôt: **14.06.2004**

(54) **Procédé d'évaluation du risque de collision fronto-arrière entre deux véhicules et dispositif de mise en oeuvre**

Verfahren und Vorrichtung zur Auswertung des Front/Heck-Kollisionsrisikos zwischen Fahrzeugen

Method and apparatus for evaluating front/rear collision risk between vehicles

(84) Etats contractants désignés:
**BE DE ES FR GB IT**

(30) Priorité: **13.06.2003 FR 0307151**

(43) Date de publication de la demande:
**15.12.2004 Bulletin 2004/51**

(73) Titulaire: **Renault s.a.s.**
**92100 Boulogne Billancourt (FR)**

(72) Inventeur: **Flegel, Philippe**
**75014 Paris (FR)**

(74) Mandataire: **Davies, Owen Robert Treharne et al**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
**EP-A- 0 550 852        EP-A- 1 067 499**
**EP-A- 1 170 652        FR-A- 2 770 016**

**Description**

La présente invention concerne un procédé qui consiste à évaluer le risque de collision fronto-arrière entre deux véhicules qui se suivent à partir de l'évolution probable du temps de suivi d'un des véhicules par rapport au véhicule cible qui le précède selon plusieurs scénarios de situations routières, notamment d'insertion suivie d'observation d'un véhicule cible plus rapide que le véhicule suiveur, ou bien d'approche, éventuellement dangereuse, sur un véhicule cible plus lent, ou encore de suivi d'une cible à iso-vitesse qui se met à freiner devant le véhicule suiveur. L'invention concerne également un dispositif de mise en oeuvre du procédé, embarqué sur le véhicule.

Actuellement, il existe des dispositifs de calcul du temps de suivi entre deux véhicules afin de permettre notamment le respect de la réglementation française, qui fixe ce temps minimal à deux secondes. La première seconde correspond au temps de réaction du conducteur face à un changement de situation routière et la deuxième seconde représente une marge couvrant les différences probables entre les capacités dynamiques des deux véhicules. Ce temps de suivi $T_s(t)$ est défini comme étant égal, à l'instant t donné, au quotient de la distance relative $D_r(t)$ entre deux véhicules par la vitesse $V_p(t)$ du véhicule équipé du dispositif:

$$T_s(t) = D_r(t)/V_p(t)$$

Le brevet US 6 388 580, déposé au nom de R. Graham, concerne un dispositif d'alerte du conducteur dans le cas où son véhicule roule trop près du véhicule qui le précède. Le dispositif mesure la distance relative instantanée entre les deux véhicules grâce à un télémètre, ainsi que la vitesse instantanée du véhicule équipé. Quand la distance n'est pas sécuritaire, compte tenu de la vitesse instantanée, une alarme est déclenchée pour prévenir le conducteur. Le critère retenu pour évaluer le risque de collision est le temps de suivi actuel, soit le quotient de la distance relative par la vitesse, sans anticipation d'une évolution future de ce paramètre, donc d'une évolution dynamique de la situation routière. Les inconvénients viennent d'une part du risque d'occurrence d'alertes tardives en cas d'approche rapide, ou d'alertes indésirables en cas d'insertions, et d'autre part du niveau de danger qui n'est pas indiqué au conducteur en continu. Le conducteur ne peut donc pas gérer finement ses distances avec les véhicules qui le précèdent, en se fiant aux seules informations binaires - danger/pas danger- dont il dispose.

Dans le cadre d'une régulation de distance « Adaptative Cruise Control ACC », qui permet au véhicule suiveur ainsi régulé de suivre sa cible à une distance de consigne prédéterminée, grâce à un contrôle automatique de l'accélération et du freinage, le conducteur d'un véhicule équipé d'un dispositif ACC peut, le cas échéant, choisir le temps suivi de consigne par rapport au véhicule cible qui le précède.

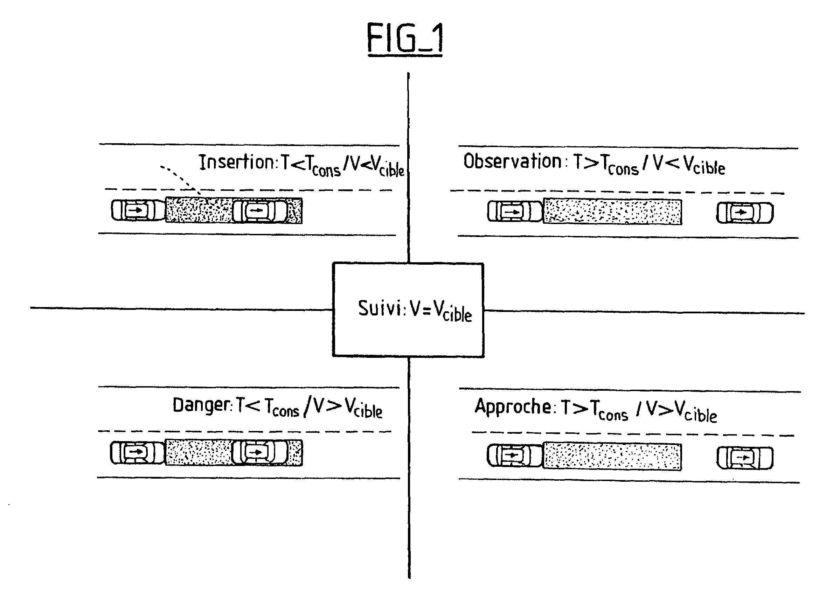

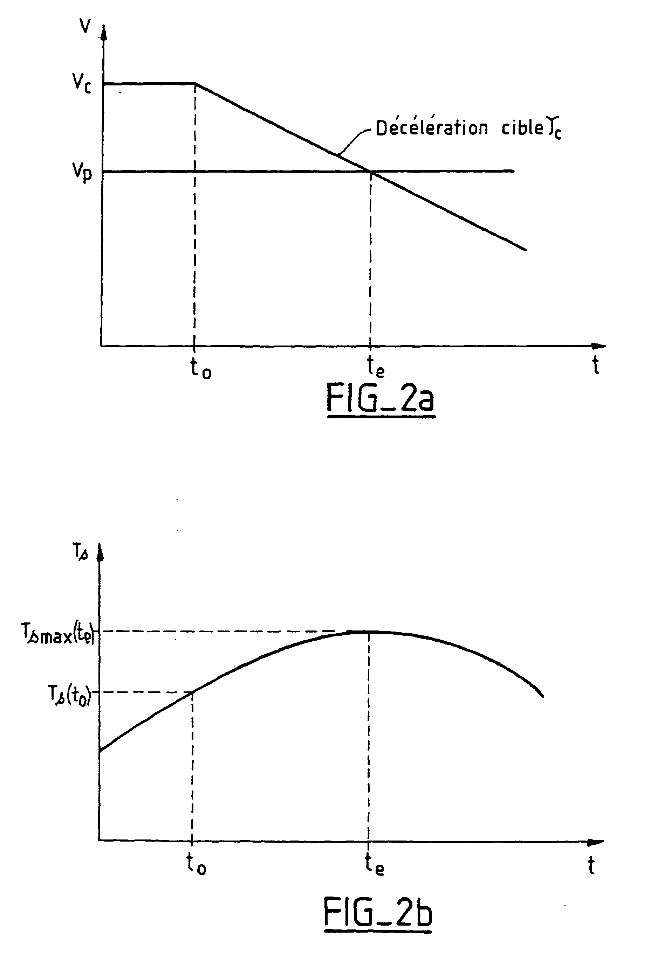

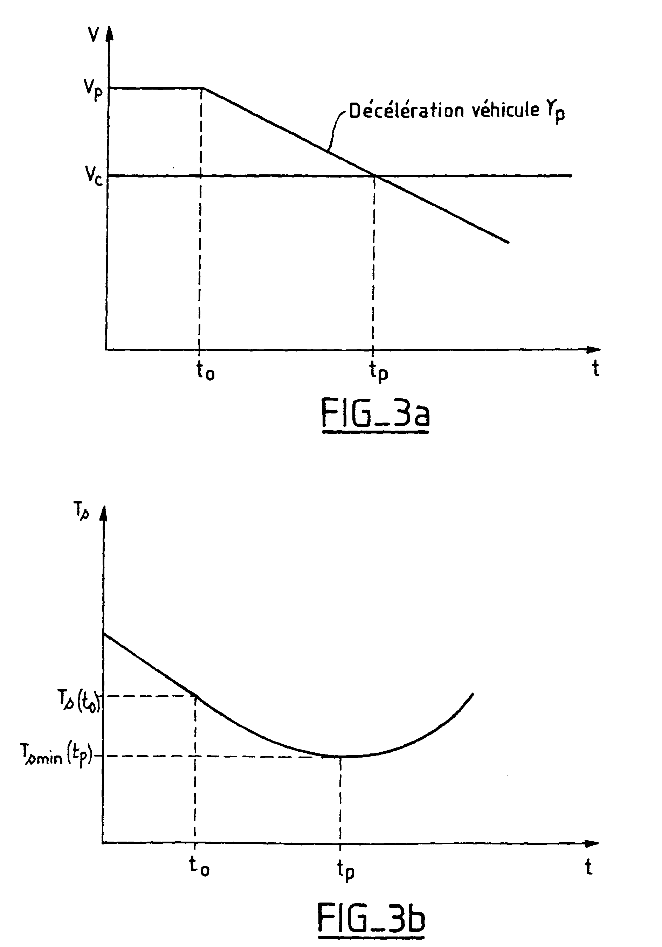

A tout instant, le dispositif de calcul du temps de suivi détermine, à partir de la vitesse Vp du véhicule équipé et de la vitesse $V_r$ et de la distance $D_r$ relatives entre les deux véhicules, dans quel scénario se trouve le véhicule équipé, sachant que cinq scénarios ont été définis dans la demande de brevet français FR 2770016 déposé au nom de RENAULT. Leur localisation dans le diagramme des phases des distances et vitesses relatives est représentée sur la figure 1, où on distingue cinq phases : une phase de suivi pour laquelle la vitesse V du véhicule équipé est égale à la vitesse du véhicule cible $V_{cible}$ ; une phase d'insertion pour laquelle la vitesse V du véhicule est inférieure à celle $V_{cible}$ de la cible et le temps de suivi $T_s$ est inférieur à une consigne $T_{cons}$ ; une phase d'observation dans laquelle la vitesse véhicule V est inférieure à celle de la cible $V_{cible}$ mais le temps de suivi est supérieur à la consigne $T_{cons}$; une phase d'approche dans laquelle la vitesse V du véhicule est supérieure à celle de la cible $V_{cible}$ et le temps $T_s$ de suivi est supérieur à la consigne $T_{cons}$ ; enfin une phase de danger dans laquelle le véhicule équipé a une vitesse V supérieure à celle de la cible $V_{cible}$ avec un temps de suivi $T_s$ inférieur à la consigne $T_{cons}$.

Si on adapte ce diagramme de phase au problème de l'évolution du temps de suivi entre deux véhicules, on distingue trois types de situations routières :

- Un premier type correspondant au suivi d'un véhicule cible à la même vitesse que celui-ci ;
- Un deuxième type correspondant à une situation d'insertion puis d'observation d'un véhicule cible plus rapide ;
- Un troisième type correspondant à une situation d'approche, éventuellement dangereuse, sur un véhicule cible plus lent.

Si dans le premier type de suivi à iso-vitesse, on sait que le temps de suivi reste constant tant que les deux véhicules considérés ne modifient pas leurs vitesses, par contre dans les deux autres types de situations, le temps de suivi va se modifier.

Ainsi, en cas de phase d'insertion d'un véhicule cible devant le véhicule équipé du dispositif suivie d'une phase d'observation, le temps de suivi va augmenter car le véhicule cible roule plus vite que le véhicule équipé. Par contre, en cas d'approche sur une cible plus lente, le temps de suivi va décroître pour atteindre éventuellement une valeur critique, si on considère que les vitesses des deux véhicules ne sont pas modifiées. C'est pourquoi, pour rendre la prestation plus sécuritaire et plus confortable pour le conducteur, il paraît intéressant de lui indiquer l'évolution probable à court terme de ce temps de suivi en fonction des différentes situations routières qu'il va rencontrer en suivant le véhicule cible.

Le but de l'invention est donc d'évaluer le niveau de risque de collision fronto-arrière entre deux véhicules qui se suivent, en estimant un temps de suivi dit anticipé, plus représentatif du niveau de risque réel que le simple temps de suivi actuel entre les deux véhicules, selon différentes évolutions possibles des situations routières.

Pour cela, un premier objet de l'invention est un procédé d'évaluation du niveau de risque de collision fronto-arrière entre deux véhicules qui se suivent, le premier étant qualifié de cible pour le second qui est équipé dudit procédé, caractérisé en ce qu'il détermine plusieurs scénarios de situation routière entre lesdits deux véhicules et calcule pour chaque scénario un temps de suivi anticipé à partir des équations cinématiques décrivant la situation routière et son évolution à court terme pendant laquelle les deux véhicules ne vont effectuer qu'une seule manoeuvre élémentaire, l'un maintenir sa vitesse constante et l'autre freiner avec une décélération constante, en fonction notamment de la distance et de la vitesse relatives entre les deux véhicules, de la vitesse du véhicule équipé et de leurs accélérations respectives, le niveau de risque étant une fonction du temps de suivi anticipé.

Un second objet de l'invention est un dispositif de mise en oeuvre du procédé d'évaluation du niveau de risque par évaluation du temps de suivi anticipé entre deux véhicules suiveurs, caractérisé en ce qu'il comporte :

- un premier module de mesure $M_m$ comprenant lui-même des premiers moyens de mesure de la distance et de la vitesse relatives $D_r$ et $V_r$ entre deux véhicules, des deuxièmes moyens $m_2$ de mesure de la vitesse $V_p$ du véhicule équipé, tels qu'un capteur odométrique embarqué mesurant la vitesse des roues et d'autres capteurs $m_3$ permettant de préciser le risque de collision, par évaluation de l'adhérence, ou par communication inter-véhicule indiquant que le conducteur du véhicule précédent s'apprête à freiner brusquement ;
- un deuxième module de décision $M_d$, comprenant des premiers moyens de calcul du temps de suivi anticipé tels que décrits auparavant et des seconds moyens de stratégies d'alerte et/ou de contrôle s'appuyant notamment sur la comparaison du facteur de risque avec au moins un seuil déterminé ;
- un troisième module d'action $M_a$, regroupant d'une part les interfaces $m_l$ homme-machine IHM, visuelles, sonores ou haptiques, destinées à indiquer en continu le niveau de risque lié au temps de suivi et/ou à l'alerter en cas de dépassement de certains seuils et d'autre part des actionneurs $m_A$ destinés à agir sur la dynamique du véhicule, de manière plus ou moins coercitive, par un léger freinage par exemple, si le temps de suivi risque d'être inférieur à deux secondes.

D'autres caractéristiques et avantages de l'invention apparaîtront à la lecture de la description suivante, illustrée par les figures qui sont, outre la figure 1 déjà décrite :

- figures $2_a$ et $2_b$ : l'évolution du temps de suivi lors d'une insertion avec freinage de la cible selon un premier scénario ;
- figure $3_a$ et $3_b$: l'évolution du temps de suivi lors d'une approche avec freinage du véhicule équipé selon un deuxième scénario;
- figure 4 : les courbes de niveau du temps de suivi anticipé selon ces deux premiers scénarios;
- figure 5 : les courbes de niveau du temps de suivi anticipé selon deux autres scénarios;
- figure 6 : un dispositif de mise en oeuvre du procédé selon l'invention.

Dans une situation routière correspondant à l'insertion d'un véhicule cible devant le véhicule équipé d'un dispositif d'évaluation du niveau de risque de collision, avec une vitesse $V_c$ supérieure à la sienne $V_p$, le temps de suivi va croître intuitivement jusqu'à une valeur infinie.

Or, pour évaluer un risque de collision entre eux de façon plus réaliste, il faut plutôt envisager un premier scénario suivant lequel le rapport des vitesses s'inverse, c'est-à-dire que le véhicule cible plus rapide que le véhicule équipé s'insère devant lui, puis freine à un instant donné $t_0$ :avec 1 une décélération constante égale à $\gamma_c$, pendant que le véhicule suiveur maintient sa vitesse constante, comme le montre la figure $2_a$.

Intuitivement, le temps de suivi $T_s$, qui est égal au quotient de la distance relative $D_r$ par la vitesse du véhicule équipé $V_p$, croît tant que la vitesse $V_c$ de la cible reste supérieure à celle $V_p$ du véhicule équipé, jusqu'à un maximum $T_{smax}$ correspondant à l'instant $t_e$ où les vitesses $V_c$ et $V_p$ des deux véhicules sont égales, puis diminue si le véhicule équipé n'effectue aucune manoeuvre, c'est-à-dire garde une vitesse constante pendant que la vitesse $V_c$ de la cible continue à diminuer (figure $2_b$).

La vitesse du véhicule équipé étant constante :

$$V_p(t) = V_p(t_0)$$

et celle de la cible décélérant à partir de $t_0$ , s'écrivant :

$$V_c(t) = V_c(t_0) + \gamma_c \cdot t$$

on en déduit que la vitesse relative $V_r(t)$ entre les deux véhicules s'écrit :

$$V_r(t) = V_c(t) - V_p(t) = V_r(t_0) + \gamma_c \cdot t$$

La distance relative entre deux véhicules s'obtenant par intégration de la vitesse relative :

$$D_r(t) = D_r(t_0) + V_r(t_0) \cdot t + \frac{\gamma_c \cdot t^2}{2}$$

le temps de suivi est donc égal à :

$$T_s(t) = \frac{D_r(t)}{V_p(t)} = \frac{D_r(t_0) + V_r(t_0) \cdot t + \frac{\gamma_c \cdot t^2}{2}}{V_p(t_0)} \qquad (e_0)$$

et croît jusqu'à un maximum obtenu quand sa dérivée s'annule.

Donc le temps de suivi maximal s'écrit selon l'équation suivante $(e_1)$ :

$$T_{smax}(t_e) = \frac{D_r(t_0) - V_r^2(t_0)/2\gamma_c}{V_p(t_0)} = T_s(t_0) - \frac{V_r^2(t_0)}{2\gamma_c \cdot V_p(t_0)} \qquad (e_1)$$

Dans ce type de situation routière, on dispose d'une marge positive car $\gamma_c$ est négative représentant une décélération, donc la valeur de $T_{smax}$ est supérieure au temps de suivi $T_s(t_0)$, à $t_0$, quand la cible commence à décélérer. Ce procédé d'évaluation du risque de collision, qui est une fonction du temps de suivi anticipé, permet une réduction sensible du taux de fausses alarmes, souvent générées dans ce type de situation par les systèmes se basant uniquement sur le temps de suivi actuel, ce qui améliore le confort de conduite.

Dans une situation routière correspondant à l'approche d'un véhicule cible par le véhicule équipé qui est plus rapide qu'elle, le temps de suivi entre ces deux véhicules va intuitivement décroître jusqu'à une valeur nulle, correspondant à une collision, si le conducteur suiveur ne réagit pas.

Pour évaluer un risque de collision plus réaliste, il faut envisager un deuxième scénario suivant lequel le véhicule équipé se rapproche d'un véhicule cible plus lent, donc sa vitesse $V_p$ est supérieure à celle $V_c$ de la cible, $V_p > V_c$, puis freine à un instant $t_0$ avec une décélération constante égale à $v_p$ pendant que la cible garde une vitesse constante comme le montre la figure $3_a$. En effet, il est plus probable que le conducteur va volontairement ralentir en s'approchant de la cible, pour éviter de l'emboutir par l'arrière.

Intuitivement, le temps de suivi $T_s$ décroît jusqu'à une valeur minimale $T_{smin}$ à l'instant tp, puis augmente pendant que la vitesse $V_p$ continue à diminuer alors que le véhicule cible n'effectue aucune manoeuvre (figure $3_b$), gardant une vitesse $V_c$ constante.

La vitesse du véhicule cible étant constante :

$$V_c(t) = V_c(t_0)$$

et celle du véhicule équipé qui décélère à partir de $t_0$ étant égale à :

$$V_p(t) = V_p(t_0) + \gamma_p \cdot t$$

on en déduit que la vitesse relative $V_r(t)$ entre les deux véhicules s'écrit :

$$V_r(t) = V_c(t) - V_p(t) = V_r(t_0) - \gamma_p \cdot t$$

La distance relative entre les deux véhicules s'obtenant par intégration de la vitesse relative :

$$D_r(t) = D_r(t_0) + V_r(t_0) \cdot t - \frac{\gamma_p \cdot t^2}{2}$$

le temps de suivi est donc égal à :

$$T_s(t) = \frac{D_r(t)}{V_p(t)} = \frac{D_r(t_0) + V_r(t_0) \cdot t - \frac{\gamma_p \cdot t^2}{2}}{V_p(t)} \qquad (E_0)$$

et décroît jusqu'à une valeur minimale obtenue quand sa dérivée s'annule. Donc

$$T_{smin}(t_p) = \frac{D_r(t_p)}{V_p(t_p)} = \frac{V_r(t_0)}{\gamma_p} - t_p$$

Comme $t_p > t_0$, on en déduit que l'équation suivante $(E_1)$ :

$$t_p = \frac{V_r(t_0)}{\gamma_p} - T_{smin}(t_p) \qquad (E_1)$$

existe si et seulement si :

$$T_{smin}(t_p) < \frac{V_r(t_0)}{\gamma_p} \qquad (E_2)$$

Dans le cas où cette condition exprimée par l'équation $(E_1)$ est vraie, l'expression $(E_0)$ du temps de suivi minimal $T_{smin}(t_p)$ à l'instant $t_p$, dans laquelle on remplace $t_p$ par l'équation $(E_1)$, est équivalente à l'équation du second degré suivante $(E_3)$ :

$$\gamma_p^2 \cdot T_s^2(t_p) - 2[V_p(t_0) + V_r(t_0)] \cdot \gamma_p \cdot T_s(t_p) + 2 D_r(t_0) \cdot \gamma_p + V_r^2(t_0) = 0 \qquad (E_3)$$

qui admet pour solution l'équation $(E_4)$ :

$$T_{s\min}(t_p) = \frac{V_p(t_0) + V_r(t_0) \pm \sqrt{[V_p(t_0) + V_r(t_0)]^2 - V_r^2(t_0) - 2 D_r(t_0) \cdot \gamma_p}}{\gamma_p} \qquad (E_4)$$

à condition que :

$$V_r(t_0) \le \frac{D_r(t_0) \cdot \gamma_p}{V_p(t_0)}$$

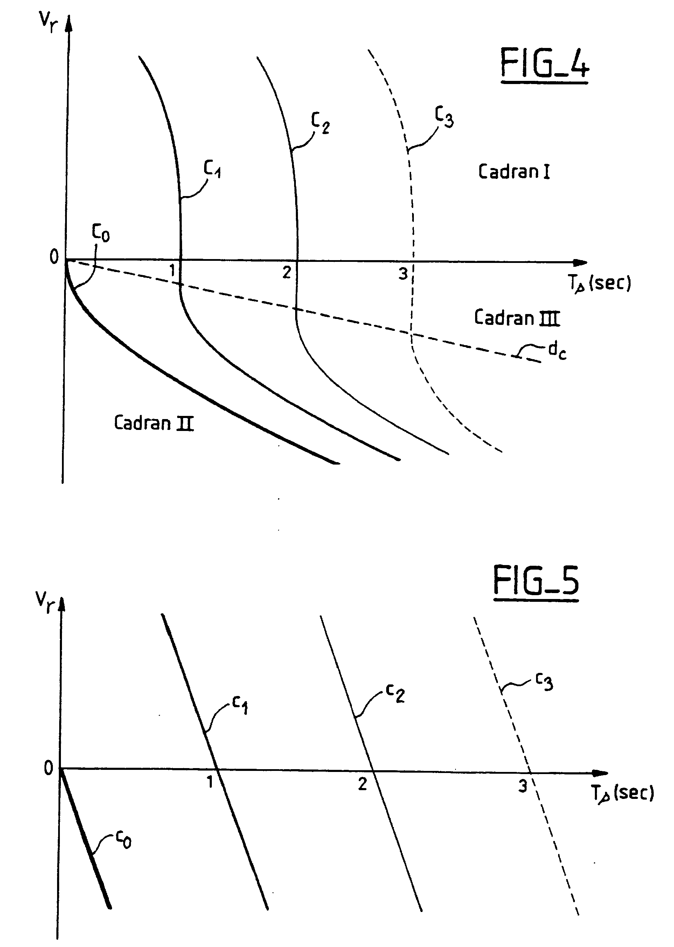

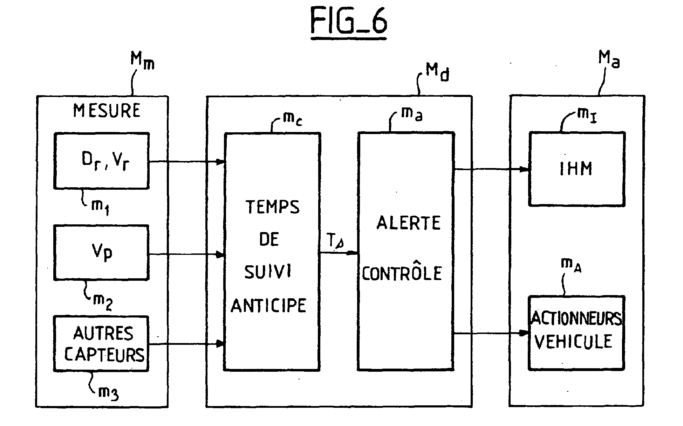

Dans ce type de scénario, l'allure des courbes $T_{s\min}(t_p)$, appelé temps de suivi anticipé, est représentée dans le cadran II de la figure 4. Cette anticipation du temps de suivi entre les deux véhicules permet une réaction plus précoce du conducteur, voire du véhicule lui-même s'il est doté d'un système automatique de commande des freins, ce qui augmente la sécurité du véhicule.

Sur cette figure 4, est représentée, par quatre courbes de niveau, la surface correspondant au temps de suivi anticipé en fonction de la vitesse relative $V_r$ entre le véhicule suiveur et le véhicule cible d'une part et le temps de suivi $T_s$ réellement mesuré à l'instant t.

Le cadran I correspond aux cas d'insertion suivie d'observation d'une cible plus rapide devant le véhicule équipé, avec un temps de suivi maximal répondant à l'équation $(e_1)$ :

$$T_{s\max}(t_e) = T_s(t_0) - \frac{V_r^2(t_0)}{2\gamma_c \cdot V_p(t_0)}$$

Les courbes $C_0$, $C_1$, $C_2$ et $C_3$ correspondent chacune à un temps de suivi anticipé égal respectivement à 0, 1, 2 et 3 secondes, à vitesse $V_p$ du véhicule et décélération $\gamma_c$ de la cible constantes. L'incurvation de ces courbes est une fonction de la décélération $y_c$ et de la vitesse $V_p$ du véhicule.

Le cadran II correspond aux cas d'approche, suivie éventuellement d'un danger, d'un véhicule équipé sur une cible plus lente, avec une condition vraie sur la vitesse relative, dont le temps de suivi minimal répond à l'équation $(E_4)$ :

$$T_{s\min}(t_p) = \frac{V_p(t_0) + V_r(t_0) \pm \sqrt{[V_p(t_0) + V_r(t_0)]^2 - V_r^2(t_0) - 2 D_r(t_0) \cdot \gamma_p}}{\gamma_p}$$

à condition que :

$$V_r(t_0) \le \frac{D_r(t_0) \cdot \gamma_p}{V_p(t_0)}$$

la droite correspondant à cette condition étant référencée $d_c$ et délimitant le cadran II du cadran III.

Par contre, si la vitesse relative des deux véhicules remplit une condition inverse de la précédente, soit :

$$V_r(t_0) > \frac{D_r(t_0) \cdot \dot{\gamma}_p}{V_p(t_0)}$$

les cas d'approche/danger d'un véhicule équipé sur un véhicule cible plus lent correspondent au cadran III de la figure 4, avec un temps de suivi minimal qui est représenté par l'équation :

$$T_{s\min}(t_p) = T_s(t_0) = \frac{D_r(t_0)}{V_p(t_0)}$$

Cette surface peut être utilisée pour indiquer au conducteur le niveau de risque, étant donné la situation actuelle de conduite. Ainsi, en fonction d'une part des mesures de la distance relative $D_r$, de la vitesse relative $V_r$ et de la vitesse $V_p$ du véhicule suiveur qui décrivent la situation cinématique instantanée du véhicule, et d'autre part des paramètres déterminés $\gamma_c$ et $\gamma_p$ de décélération du véhicule suiveur et de sa cible, le procédé selon l'invention évalue le facteur de risque $F_r$ lié à l'évolution possible du temps de suivi selon différentes situations routières envisageables.

Dans la situation routière correspondant à l'insertion d'un véhicule cible devant le véhicule équipé d'un dispositif d'évaluation du niveau de risque de collision, avec une vitesse relative $V_r$, un troisième scénario envisage que le rapport des vitesses s'inverse, c'est-à-dire que le véhicule cible s'insère devant le véhicule qui maintient sa vitesse constante, puis freine à un instant donné $t_0$ avec une décélération constante égale à $\gamma_c$ , et le procédé calcule le temps de suivi anticipé au bout d'une seconde après le début du freinage de la cible, cette seconde correspondant au temps de réaction du conducteur.

La vitesse du véhicule équipé étant constante :

$$V_p(t) = V_p(t_0)$$

et celle de la cible décélérant à partir de $t_0$ :

$$V_c(t) = V_c(t_0) + \gamma_c \cdot t$$

on en déduit que la vitesse relative $V_r(t)$ entre les deux véhicules s'écrit :

$$V_r(t) = V_c(t) - V_p(t) = V_r(t_0) + \gamma_c \cdot t$$

L'intégration de la vitesse relative donne la distance relative entre deux véhicules qui s'obtient par :

$$D_r(t) = D_r(t_0) + V_r(t_0) \cdot t + \frac{\gamma_c \cdot t^2}{2}$$

La valeur de cette distance $D_r(1)$ au bout d'une seconde est donc égale à :

$$D_r(1) = D_r(0) + V_r(0) + \frac{\gamma_c}{2}$$

et le temps de suivi $T_s(1)$ au bout d'une seconde est égal à :

$$T_s(1) = \frac{D_r(1)}{V_p(1)} = \frac{D_r(0) + V_r(0) + \frac{\gamma_c}{2}}{V_p(0)} \qquad (e_2)$$

Dans une situation routière correspondant au suivi d'un véhicule cible par le véhicule équipé d'un dispositif d'évaluation du niveau de risque de collision, avec une même vitesse, $V_c = V_p$, et à une distance $D_0$, un quatrième scénario envisage que la cible freine à un instant $t_1$ avec une décélération constante égale à $\gamma_c$ alors que le véhicule suiveur garde une vitesse constante. Le procédé selon l'invention calcule le temps de suivi au bout d'une durée d'une seconde après le début du freinage.

La vitesse du véhicule équipé étant constante :

$$V_p(t) = V_p(t_0)$$

et celle de la cible décélérant à partir de $t_0$ :

$$V_c(t) = V_c(t_0) + \gamma_c \cdot t$$

on en déduit que la vitesse relative $V_r(t)$ entre les deux véhicules s'écrit :

$$V_r(t) = V_c(t) - V_p(t) = \gamma_c \cdot t$$

L'intégration de la vitesse relative donne la distance relative entre deux véhicules qui s'obtient par :

$$D_r(t) = D_r(t_0) + \frac{\gamma_c \cdot t^2}{2}$$

On en déduit la valeur de la distance $D_r(1)$ au bout d'une seconde :

$$D_r(1) = D_r(0) + \frac{\gamma_c}{2}$$

et celle du temps de suivi $T'_s(1)$ au bout d'une seconde

$$T'_s(1) = \frac{D_r(1)}{V_p(1)} = \frac{D_r(0) + \frac{\gamma_c}{2}}{V_p(0)} \qquad (E5)$$

On constate que :

$$T_s(1) = T'_s(1) + \frac{V_r(0)}{V_p(0)} \qquad (E6)$$

Ainsi, le fait que dans le troisième scénario, le véhicule cible s'insère devant le véhicule équipé avec une vitesse relative $V_r$ implique une marge, qui est positive si la vitesse $V_r$ est positive et négative dans le cas contraire, en terme de temps de suivi. Les courbes $C_0$, $C_1$, $C_2$ et $C_3$ de la figure 5 correspondent chacune à un temps de suivi anticipé égal respectivement à 0, 1, 2 et 3 secondes, à vitesse $V_p$ constante du véhicule équipé. La pente de ces courbes est une fonction de la vitesse $V_p$ du véhicule équipé. Comme précédemment à propos des courbes de la figure 4, l'équation de surface peut être utilisée pour indiquer au conducteur le niveau de risque de collision, étant donné la situation instantanée de conduite.

Comme le montre la figure 6, le dispositif de mise en oeuvre du procédé d'évaluation du niveau de risque par évaluation de la distance de sécurité entre deux véhicules suiveurs, embarqué sur le véhicule, comporte un premier module de mesure $M_m$ comprenant lui-même premièrement des moyens $m_1$ de mesure de la distance et de la vitesse relatives $D_r$ et $V_r$ entre deux véhicules. Ces moyens de mesure sont par exemple un capteur télémétrique, de type radar, Lidar, lasermètre ou autres, équipant l'avant du véhicule.

Ce premier module comprend également des deuxièmes moyens $m_2$ de mesure de la vitesse $V_p$ du véhicule équipé, tels qu'un capteur odométrique embarqué mesurant la vitesse des roues.

Il peut comprendre enfin d'autres capteurs $m_3$ permettant de préciser le risque de collision, par évaluation de l'adhérence, ou par communication inter-véhicule indiquant que le conducteur du véhicule précédent s'apprête à freiner brusquement.

Le dispositif comporte un deuxième module de décision $M_d$, qui peut être intégré dans le calculateur électronique de la régulation de distance ACC quand le véhicule en est doté, comprenant des premiers moyens $m_c$ de calcul du temps de suivi anticipé tels que décrits auparavant et des seconds moyens $m_a$ de stratégies d'alerte et/ou de contrôle s'appuyant notamment sur la comparaison du facteur de risque avec au moins un seuil déterminé, par exemple les deux secondes de la réglementation française dans le cas où le facteur de risque est égal au temps de suivi anticipé.

Enfin, le dispositif comporte un troisième module d'action $M_a$, regroupant d'une part les interfaces homme-machine $m_1$, visuelles, sonores ou haptiques, destinées à indiquer, en continu au conducteur, le niveau de risque lié au temps de suivi et/ou à l'alerter en cas de dépassement de certains seuils et d'autre part des actionneurs $m_A$ destinés à agir sur la dynamique du véhicule, de manière plus ou moins coercitive, par un léger freinage par exemple si le temps de suivi risque d'être inférieur à deux secondes.

Ainsi, l'invention permet l'évaluation du niveau de risque de collision fronto-arrière par anticipation pessimiste de l'évolution de la situation routière entre les deux véhicules qui se suivent. Le calcul du niveau de risque de collision, qui est une fonction du temps de suivi anticipé, par exemple l'inverse du temps de suivi anticipé dans un cas particulier, est effectué en temps réel, ce qui permet au conducteur de conduire plus prudemment et plus confortablement.

## Revendications

1. Procédé d'évaluation du niveau de risque de collision fronto-arrière entre deux véhicules qui se suivent, le premier étant qualifié de cible pour le second qui est équipé dudit procédé, **caractérisé en ce qu'**il détermine plusieurs scénarios de situation routière entre lesdits deux véhicules et calcule pour chaque scénario un temps de suivi anticipé, qui est égal au quotient de la distance relative ($D_r$) par la vitesse du véhicule équipé ($V_p$), à partir des équations cinématiques décrivant la situation routière et son évolution à court terme pendant laquelle les deux véhicules ne vont effectuer qu'une seule manoeuvre élémentaire, l'un maintenir sa vitesse constante et l'autre freiner avec une décélération constante, en fonction notamment de la distance et de la vitesse relatives entre les deux véhicules, de la vitesse du véhicule équipé et de leurs accélérations respectives, le niveau de risque étant une fonction du temps de suivi anticipé.

2. Procédé d'évaluation selon la revendication 1, **caractérisé en ce qu'**il envisage, dans une situation routière correspondant à l'insertion, devant le véhicule équipé d'un dispositif d'évaluation du niveau de risque de collision, d'un véhicule cible avec une vitesse ($V_c$) supérieure à la sienne ($V_p$), un premier scénario suivant lequel le rapport des vitesses s'inverse, c'est-à-dire que le véhicule cible plus rapide que le véhicule équipé s'insère devant lui, puis freine à un instant donné ($t_o$) avec une décélération constante égale à ($\gamma_c$), pendant que le véhicule suiveur maintient sa vitesse constante, de sorte que le temps de suivi ($T_s$) croît tant que la vitesse ($V_c$) de la cible reste supérieure à celle ($V_p$) du véhicule équipé, jusqu'à un maximum ($T_{smax}$) correspondant à l'instant ($t_e$) où les vitesses ($V_c$ et $V_p$) des deux véhicules sont égales, puis diminue si le véhicule équipé garde une vitesse constante pendant que la vitesse ($V_c$) de la cible continue à diminuer, et **en ce qu'**il calcule le temps de suivi qui est égal à:

$$T_s(t) = \frac{D_r(t)}{V_p(t)} = \frac{D_r(t_0) + V_r(t_0) * t + \frac{\gamma_c * t^2}{2}}{V_p(t_0)}$$

et croît jusqu'à un maximum obtenu quand sa dérivée s'annule :

$$T_{smax}(t_c) = \frac{D_r(t_0) - V_r^2(t_0)/2\gamma_c}{V_p(t_0)} = T_s(t_0) - \frac{V_r^2(t_0)}{2\gamma_c \cdot V_p(t_0)}$$

la valeur de $(T_{smax})$ étant supérieure au temps de suivi $[T_s(t_0)]$, à $(t_0)$, quand la cible commence à décélérer.

**3.** Procédé d'évaluation selon la revendication 1, **caractérisé en ce qu'**il envisage, dans une situation routière correspondant à l'approche d'un véhicule cible par le véhicule équipé qui est plus rapide qu'elle, un deuxième scénario suivant lequel le véhicule équipé se rapproche du véhicule cible plus lent, puis freine à un instant $(t_0)$ avec une décélération constante égale à $(\gamma_p)$ pendant que la cible garde une vitesse constante , et **en ce qu'**il calcule le temps de suivi $(T_s)$ qui est égal à :

$$T_s(t) = \frac{D_r(t)}{V_p(t)} = \frac{D_r(t_0) + V_r(t_0) \cdot t - \frac{\gamma_p \cdot t^2}{2}}{V_p(t)}$$

et qui décroît jusqu'à une valeur minimale $[T_{smin}(d_p)]$ :

$$T_{smin}(t_p) = \frac{D_r(t_p)}{V_p(t_p)} = \frac{V_r(t_0)}{\gamma_p} - t_p$$

correspondant à l'instant $(t_p)$ où les vitesses $(V_c$ et $V_p)$ des deux véhicules sont égales, puis augmente pendant que la vitesse $(V_p)$ continue à diminuer alors que le véhicule cible garde une vitesse $(V_c)$ constante.

**4.** Procédé d'évaluation selon la revendication 1, **caractérisé en ce qu'**il envisage, dans la situation routière correspondant à l'insertion, devant le véhicule équipé d'un dispositif d'évaluation du niveau de risque de collision, d'un véhicule cible avec une vitesse $(V_c)$ supérieure à la sienne $(V_p)$, un troisième scénario dans lequel le rapport des vitesses s'inverse, c'est-à-dire que le véhicule cible s'insère devant le véhicule qui maintient sa vitesse constante, puis freine à un instant donné $(t_0)$ avec une décélération constante égale à $(y_c)$, et **en ce qu'**il calcule le temps de suivi $[T_s(1)]$ anticipé au bout d'une seconde après le début du freinage de la cible:

$$T_s(1) = \frac{D_r(1)}{V_p(1)} = \frac{D_r(0) + V_r(0) + \frac{\gamma_c}{2}}{V_p(0)}$$

**5.** Procédé d'évaluation selon la revendication 1, **caractérisé en ce qu'**il envisage, dans une situation routière correspondant au suivi, par le véhicule équipé d'un dispositif d'évaluation du niveau de risque de collision, d'un véhicule cible avec une même vitesse et à une distance $(D_0)$, un quatrième scénario selon lequel le véhicule cible freine à un instant $(t_f)$ avec une décélération constante égale à $(\gamma_c)$ alors que le véhicule suiveur garde une vitesse constante, et **en ce qu'**il calcule le temps de suivi $[T'_s(1)]$ au bout d'une durée d'une seconde après le début du freinage :

$$T'_s(1) = \frac{D_r(1)}{V_p(1)} = \frac{D_r(0) + \frac{\gamma_c}{2}}{V_p(0)}$$

**6.** Dispositif de mise en oeuvre du procédé d'évaluation du niveau de risque par évaluation du temps de suivi anticipé entre deux véhicules suiveurs, selon les revendications 1 à 5, **caractérisé en ce qu'**il comporte :

- un premier module de mesure $(M_m)$ comprenant lui-même des premiers moyens $(m_1)$ de mesure de la distance et de la vitesse relatives $(D_r$ et $V_r)$ entre deux véhicules, des deuxièmes moyens $(m_2)$ de mesure de la vitesse

($V_p$) du véhicule équipé, tels qu'un capteur odométrique embarqué mesurant la vitesse des roues et d'autres capteurs ($m_3$) permettant de préciser le risque de collision, par évaluation de l'adhérence, ou par communication inter-véhicule indiquant que le conducteur du véhicule précédent s'apprête à freiner brusquement ;

- un deuxième module de décision ($M_d$), comprenant des premiers moyens de calcul du temps de suivi anticipé tels que décrits auparavant et des seconds moyens de stratégies d'alerte et/ou de contrôle du facteur de risque par comparaison avec au moins un seuil déterminé ;

- un troisième module d'action ($M_a$), regroupant d'une part les interfaces ($m_1$) homme-machine IHM, visuelles, sonores ou haptiques, destinées à indiquer en continu le niveau de risque lié au temps de suivi et/ou à l'alerter en cas de dépassement de certains seuils et d'autre part des actionneurs ($m_A$) destinés à agir sur la dynamique du véhicule, de manière plus ou moins coercitive, par un léger freinage par exemple, si le temps de suivi risque d'être inférieur à deux secondes.

**7.** Dispositif de mise en oeuvre du procédé selon la revendication 6, **caractérisé en ce que** les moyens ($m_1$) de mesure de la distance et de la vitesse relatives ($D_r$ et $V_r$) entre deux véhicules sont par exemple un capteur télémétrique, de type radar, Lidar, lasermètre ou autres, équipant l'avant du véhicule.

**8.** Dispositif de mise en oeuvre du procédé selon la revendication 6, **caractérisé en ce que** les seconds moyens de stratégies d'alerte et/ou de contrôle du facteur de risque comparent le temps de suivi anticipé à un seuil égal à deux secondes .

**Claims**

**1.** Method of evaluating the level of risk of front/rear collision between two vehicles following one another, the first being dubbed target in respect of the second which is equipped with the said method, **characterized in that** it determines several scenarios of road situation between the said two vehicles and calculates for each scenario an anticipated following time, which is equal to the quotient of the relative distance ($D_r$) to the speed of the equipped vehicle ($V_p$), on the basis of the kinematic equations describing the road situation and its short-term evolution during which the two vehicles will perform only a single elementary manoeuvre, one maintaining its speed constant and the other braking with a constant deceleration, as a function in particular of the relative distance and of the relative speed between the two vehicles, of the speed of the equipped vehicle and of their respective accelerations, the level of risk being a function of the anticipated following time.

**2.** Method of evaluation according to Claim 1, **characterized in that** it envisages, in a road situation corresponding to the insertion, ahead of the vehicle equipped with a device for evaluating the level of risk of collision, of a target vehicle with a speed ($V_c$) greater than its own ($V_p$), a first scenario according to which the ratio of the speeds inverts, that is to say that the target vehicle faster than the equipped vehicle inserts itself ahead of it, then brakes at a given instant ($t_0$) with a constant deceleration equal to ($\gamma_c$), while the following vehicle maintains its speed constant, so that the following time ($T_s$) increases as long as the speed ($V_c$) of the target remains greater than that ($V_p$) of the equipped vehicle, up to a maximum ($T_{smax}$) corresponding to the instant ($t_e$) at which the speeds ($V_c$ and $V_p$) of the two vehicles are equal, then decreases if the equipped vehicle retains a constant speed while the speed ($V_c$) of the target continues to decrease, and **in that** it calculates the following time, which is equal to:

$$T_s(t) = \frac{D_r(t)}{V_p(t)} = \frac{D_r(t_0) + V_r(t_0) * t + \frac{\gamma_c * t^2}{2}}{V_p(t_0)}$$

and increases up to a maximum obtained when its derivative vanishes:

$$T_{smax}(t_c) = \frac{D_r(t_0) - V_r^2(t_0)/2\gamma_c}{V_p(t_0)} = T_s(t_0) - \frac{V_r^2(t_0)}{2\gamma_c \cdot V_p(t_0)}$$

the value of ($T_{smax}$) being greater than the following time [$T_s$ ($t_0$)] , at ($t_0$) , when the target begins to decelerate.

3.  Method of evaluation according to Claim 1, **characterized in that** it envisages, in a road situation corresponding to the approaching of a target vehicle by the equipped vehicle which is faster than it, a second scenario according to which the equipped vehicle gets closer to the slower target vehicle, then brakes at an instant ($t_0$) with a constant deceleration equal to ($\gamma_p$) while the target retains a constant speed, and **in that** it calculates the following time ($T_s$), which is equal to:

$$T_s(t) = \frac{D_r(t)}{V_p(t)} = \frac{D_r(t_0) + V_r(t_0) \cdot t - \frac{\gamma_p \cdot t^2}{2}}{V_p(t)}$$

and which drops down to a minimum value [$T_{smin}(d_p)$] :

$$T_{smin}(t_p) = \frac{D_r(t_p)}{V_p(t_p)} = \frac{V_r(t_0)}{\gamma_p} - t_p$$

corresponding to the instant ($t_p$) at which the speeds ($V_c$ and $V_p$) of the two vehicles are equal, then rises while the speed ($V_p$) continues to decrease although the target vehicle retains its constant speed ($V_c$).

4.  Method of evaluation according to Claim 1, **characterized in that** it envisages, in the road situation corresponding to the insertion, ahead of the vehicle equipped with a device for evaluating the level of risk of collision, or of a target vehicle with a speed ($V_c$) greater than its own ($V_p$), a third scenario in which the ratio of the speeds inverts, that is to say that the target vehicle inserts itself ahead of the vehicle which maintains its speed constant, then brakes at a given instant ($t_0$) with a constant deceleration equal to ($\gamma_c$), and **in that** it calculates the following time [$T_s(1)$] anticipated at the end of a second after the start of the braking of the target:

$$T_s(1) = \frac{D_r(1)}{V_p(1)} = \frac{D_r(0) + V_r(0) + \frac{\gamma_c}{2}}{V_p(0)}$$

5.  Method of evaluation according to Claim 1, **characterized in that** it envisages, in a road situation corresponding to the following, by the vehicle equipped with a device for evaluating the level of risk of collision, of a target vehicle with one and the same speed and at a distance ($D_0$), a fourth scenario according to which the target vehicle brakes at an instant ($t_f$) with a constant deceleration equal to ($\gamma_c$) while the following vehicle retains a constant speed, and **in that** it calculates the following time [$T'_s(1)$] after a duration of a second subsequent to the start of braking:

$$T'_s(1) = \frac{D_r(1)}{V_p(1)} = \frac{D_r(0) + \frac{\gamma_c}{2}}{V_p(0)}$$

6.  Device for implementing the method of evaluation of the level of risk by evaluation of the anticipated following time between two following vehicles, according to Claims 1 to 5, **characterized in that** it comprises:

    - a first measurement module ($M_m$) itself comprising first means ($m_1$) of measuring the relative distance and relative speed ($D_r$ and $V_r$) between two vehicles, second means ($m_2$) of measuring the speed ($V_p$) of the equipped vehicle, such as an onboard odometer sensor measuring the speed of the wheels and other sensors ($m_3$) making it possible to pinpoint the risk of collision, by evaluation of the grip, or by inter-vehicle communication indicating that the driver of the preceding vehicle is getting ready to brake abruptly;

- a second decision module ($M_d$), comprising first means, as described above, of calculating the anticipated following time and second means of strategies for alert and/or for control of the risk factor by comparison with at least one determined threshold;

- a third action module ($M_a$), grouping together on the one hand the visual, sound or haptic MMI man/machine interfaces ($m_I$), intended to continuously indicate the level of risk related to the following time and/or to alert it in case of overshoot of certain thresholds and on the other hand actuators ($m_A$) intended to act on the dynamics of the vehicle, in a more or less coercive manner, through light braking for example, if there is a risk of the following time being less than two seconds.

7. Device for implementing the method according to Claim 6, **characterized in that** the means ($m_1$) of measuring the relative distance and relative speed ($D_r$ and $V_r$) between two vehicles are for example a telemetric sensor, of radar, Lidar, lasermetre type or the like, with which the front of the vehicle is equipped.

8. Device for implementing the method according to Claim 6, **characterized in that** the second means of strategies of alert and/or of control of the risk factor compare the anticipated following time with a threshold equal to two seconds.

**Patentansprüche**

1. Verfahren zur Einschätzung der Front/Heck-Kollisionsgefahr zwischen zwei hintereinander fahrenden Fahrzeugen, wobei das erste als Zielfahrzeug für das zweite bezeichnet wird, das mit dem Verfahren ausgestattet ist, **dadurch gekennzeichnet, dass** das Verfahren mehrere Szenarien von Verkehrssituationen zwischen den beiden Fahrzeugen bestimmt und für jedes Szenario eine voraussichtliche Folgeabstandszeit berechnet, die gleich dem Quotient der relativen Entfernung ($D_r$) durch die Geschwindigkeit des ausgestatteten Fahrzeugs ($V_p$) ist, ausgehend von den kinematischen Gleichungen, die die Verkehrssituation und ihre kurzfristige Entwicklung beschreiben, während der die beiden Fahrzeuge nur ein einziges elementares Manöver ausführen, das eine seine Geschwindigkeit konstant hält und das andere mit konstanter Verlangsamung bremst, insbesondere in Abhängigkeit von der relativen Entfernung und der relativen Geschwindigkeit zwischen den beiden Fahrzeugen, von der Geschwindigkeit des ausgestatteten Fahrzeugs, und von ihren jeweiligen Beschleunigungen, wobei die Gefahrenstufe eine Funktion der voraussichtlichen Folgeabstandszeit ist.

2. Einschätzungsverfahren nach Anspruch 1, **dadurch gekennzeichnet, dass** es in einer Verkehrssituation, die dem Einordnen eines Zielfahrzeugs vor dem mit einer Vorrichtung zur Einschätzung der Kollisionsgefahrenstufe ausgestatteten Fahrzeug mit einer Geschwindigkeit ($V_c$), die höher ist als seine eigene ($V_p$), entspricht, ein erstes Szenario in Betracht zieht, gemäß dem das Verhältnis der Geschwindigkeiten sich umkehrt, d.h., dass das Zielfahrzeug, das schneller ist als das ausgestattete Fahrzeug, sich vor diesem einordnet und dann in einem gegebenen Zeitpunkt ($t_0$) mit einer konstanten Verlangsamung gleich ($\gamma_c$) bremst, während das Folgefahrzeug seine Geschwindigkeit konstant hält, so dass die Folgeabstandszeit ($T_s$) zunimmt, so lange die Geschwindigkeit ($V_c$) des Zielfahrzeugs höher bleibt als diejenige ($V_p$) des ausgestatteten Fahrzeugs, bis zu einem Maximum ($T_{smax}$), das dem Zeitpunkt ($t_e$) entspricht, in dem die Geschwindigkeiten ($V_c$ und $V_p$) der beiden Fahrzeuge gleich sind, und dann abnimmt, wenn das ausgestattete Fahrzeug eine konstante Geschwindigkeit beibehält, während die Geschwindigkeit ($V_c$) des Zielfahrzeugs weiter abnimmt, und dass es die Folgeabstandszeit berechnet, die gleich

$$T_s(t) = \frac{D_r(t)}{V_p(t)} = \frac{D_r(t_0) + V_r(t_0) * t + \frac{\gamma_c * t^2}{2}}{V_p(t_0)}$$

ist, und bis zu einem Maximum zunimmt, das erhalten wird, wenn sein Differentialquotient sich annulliert:

$$T_{s\,max}(t_c) = \frac{D_r(t_0) - v_r^2(t_0) / 2\gamma_c}{v_p(t_0)} = T_s(t_0) - \frac{v_r^2(t_0)}{2\gamma_c * v_p(t_0)}$$

wobei der Wert von $(T_{smax})$ höher ist als die Folgeabstandszeit $[T_s(t_0)]$, auf $(t_0)$, wenn das Zielfahrzeug beginnt, sich zu verlangsamen.

3. Einschätzungsverfahren nach Anspruch 1, **dadurch gekennzeichnet, dass** es in einer Verkehrssituation, die der Annäherung an ein Zielfahrzeug durch das ausgestattete Fahrzeug entspricht, das schneller ist als das Zielfahrzeug, ein zweites Szenario in Betracht zieht, gemäß dem das ausgestattete Fahrzeug sich dem langsameren Zielfahrzeug nähert und dann in einem Zeitpunkt $(t_0)$ mit einer konstanten Verlangsamung gleich $(\gamma_p)$ bremst, während das Zielfahrzeug eine konstante Geschwindigkeit beibehält, und dass es die Folgeabstandszeit $(T_s)$ berechnet, die gleich

$$T_s(t) = \frac{D_r(t)}{v_p(t)} = \frac{D_r(t_0) + v_r(t_0) * t + \dfrac{\gamma_p * t^2}{2}}{v_p(t)}$$

ist, und die bis auf einen minimalen Wert $[T_{smin}(d_p)]$ abnimmt:

$$T_{s\,min}(t_p) = \frac{D_r(t_p)}{v_p(t_p)} = \frac{v_r(t_0)}{\gamma_p} - t_p$$

der dem Zeitpunkt $(t_p)$ entspricht, in dem die Geschwindigkeiten $(V_c$ und $V_p)$ der beiden Fahrzeuge gleich sind, und dann zunimmt, während die Geschwindigkeit $(V_p)$ weiter abnimmt, während das Zielfahrzeug eine konstante Geschwindigkeit $(V_c)$ beibehält.

4. Einschätzungsverfahren nach Anspruch 1, **dadurch gekennzeichnet, dass** es in der Verkehrssituation, die dem Einordnen eines Zielfahrzeugs vor dem mit einer Vorrichtung zur Einschätzung der Kollisionsgefahrenstufe ausgestatteten Fahrzeug mit einer Geschwindigkeit $(V_c)$, die größer ist als seine eigene $(V_p)$, entspricht, ein drittes Szenario in Betracht zieht, bei dem das Verhältnis der Geschwindigkeiten sich umkehrt, d.h., dass das Zielfahrzeug sich vor dem Fahrzeug einordnet, das seine Geschwindigkeit konstant hält, und dann in einem gegebenen Zeitpunkt $(t_0)$ mit einer konstanten Verlangsamung gleich $(\gamma_c)$ bremst, und dass es die voraussichtliche Folgeabstandszeit $[T_s(1)]$ eine Sekunde nach dem Beginn des Bremsvorgangs des Zielfahrzeugs berechnet:

$$T_s(1) = \frac{D_r(1)}{v_p(1)} = \frac{D_r(0) + v_r(0) + \dfrac{\gamma_c}{2}}{v_p(0)}$$

5. Einschätzungsverfahren nach Anspruch 1, **dadurch gekennzeichnet, dass** es in einer Verkehrssituation, die dem Fahren des mit einer Vorrichtung zur Einschätzung der Kollisionsgefahrenstufe ausgestatteten Fahrzeugs hinter einem Zielfahrzeug mit gleicher Geschwindigkeit und mit einer Entfernung $(D_0)$ entspricht, ein viertes Szenario in Betracht zieht, gemäß dem das Zielfahrzeug in einem Zeitpunkt $(t_1)$ mit einer konstanten Verlangsamung gleich $(\gamma_c)$ bremst, während das nachfolgende Fahrzeug eine konstante Geschwindigkeit beibehält, und dass es die Folgeabstandszeit $[T'_s(1)]$ nach einer Dauer von einer Sekunde nach dem Beginn des Bremsvorgangs berechnet:

$$T_s'(1) \;=\; \frac{D_r(1)}{V_p(1)} \;=\; \frac{D_r(0) + \frac{\gamma_c}{2}}{V_p(0)}$$

**6.** Vorrichtung zur Anwendung des Verfahrens zur Einschätzung der Gefahrenstufe durch Einschätzung der voraussichtlichen Folgeabstandszeit zwischen zwei hintereinander fahrenden Fahrzeugen nach den Ansprüchen 1 bis 5, **dadurch gekennzeichnet, dass** sie aufweist:

- einen ersten Messmodul ($M_m$), der selbst erste Mittel ($m_1$) zur Messung der relativen Entfernung und der relativen Geschwindigkeit ($D_r$ und $V_r$) zwischen zwei Fahrzeugen, zweite Mittel ($m_2$) zur Messung der Geschwindigkeit ($V_p$) des ausgestatteten Fahrzeugs, wie zum Beispiel ein an Bord befindlicher Wegstreckensensor, der die Geschwindigkeit der Räder misst, und weitere Sensoren ($m_3$) aufweist, die es ermöglichen, die Kollisionsgefahr durch Einschätzung der Haftung oder durch Kommunikation zwischen den Fahrzeugen, die anzeigt, dass der Fahrer des vorausfahrenden Fahrzeugs abrupt bremsen wird, zu präzisieren;
- einen zweiten Entscheidungsmodul ($M_d$), der erste wie oben beschriebene Mittel zur Berechnung der voraussichtlichen Folgeabstandszeit und zweite Alarm- und/oder Kontroll-Strategiemittel des Risikofaktors durch Vergleich mit mindestens einem bestimmten Schwellwert aufweist;
- einen dritten Aktionsmodul ($M_a$), der einerseits die visuellen, auditiven oder haptischen Mensch-Maschine-Schnittstellen IHM ($m_1$), die dazu bestimmt sind, kontinuierlich die mit der Folgeabstandszeit verbundenen Gefahrenstufe anzuzeigen und/oder im Fall einer Überschreitung bestimmter Schwellwerte einen Alarm auszulösen, und andererseits Stellantriebe ($m_A$) zusammenfasst, die dazu bestimmt sind, mehr oder weniger zwingend auf die Dynamik des Fahrzeugs einzuwirken, zum Beispiel durch ein leichtes Bremsen, wenn die Folgeabstandszeit Gefahr läuft, unter zwei Sekunden zu sinken.

**7.** Vorrichtung zur Anwendung des Verfahrens nach Anspruch 6, **dadurch gekennzeichnet, dass** die Mittel ($m_1$) zur Messung der relativen Entfernung und der relativen Geschwindigkeit ($D_r$ und $V_r$) zwischen zwei Fahrzeugen zum Beispiel eine Telemetersonde, vom Typ Radar, Lidar, Lasermesser oder andere sind, die vorne am Fahrzeug angebracht sind.

**8.** Vorrichtung zur Anwendung des Verfahrens nach Anspruch 6, **dadurch gekennzeichnet, dass** die zweiten Alarm- und/oder Kontroll-Strategiemittel des Risikofaktors die voraussichtliche Folgeabstandszeit mit einem Schwellwert von zwei Sekunden vergleichen.

EP 1 486 934 B1

# FIG_1

Insertion : $T < T_{cons} / V < V_{cible}$

Observation : $T > T_{cons} / V < V_{cible}$

Suivi : $V = V_{cible}$

Danger : $T < T_{cons} / V > V_{cible}$

Approche : $T > T_{cons} / V > V_{cible}$

FIG_2a

FIG_2b

FIG_3a

FIG_3b

FIG_4

FIG_5

# FIG_6